(19) **Europäisches Patentamt / European Patent Office / Office européen des brevets**

(11) **EP 3 123 119 B1**

(12) **FASCICULE DE BREVET EUROPEEN**

(45) Date de publication et mention
de la délivrance du brevet:
**18.04.2018 Bulletin 2018/16**

(21) Numéro de dépôt: **15711165.9**

(22) Date de dépôt: **20.03.2015**

(51) Int Cl.:
*G01D 11/30* (2006.01)    *G01M 5/00* (2006.01)
*E21B 47/00* (2012.01)    *E21B 47/01* (2012.01)
*E21B 17/20* (2006.01)    *F16L 11/12* (2006.01)

(86) Numéro de dépôt international:
**PCT/EP2015/055889**

(87) Numéro de publication internationale:
**WO 2015/144575 (01.10.2015 Gazette 2015/39)**

(54) **TUBE FLEXIBLE EQUIPE DE CHAÎNES DE CAPTEURS DE MESURE**

FLEXIBLES ROHR MIT KETTEN VON MESSSENSOREN

FLEXIBLE TUBE PROVIDED WITH CHAINS OF MEASUREMENT SENSORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.03.2014 FR 1452694**

(43) Date de publication de la demande:
**01.02.2017 Bulletin 2017/05**

(73) Titulaires:
• **Commissariat à l'Énergie Atomique et aux Énergies Alternatives
75015 Paris (FR)**
• **Technip France
92400 Courbevoie (FR)**

(72) Inventeurs:
• **JOUANET, Laurent
F-38880 Autrans (FR)**
• **CARMONA, Mikaël
F-38570 Tencin (FR)**
• **DELCROIX, Olivier
F-76000 Rouen (FR)**

(74) Mandataire: **Priori, Enrico et al
Marks & Clerk France
Conseils en Propriété Industrielle
Immeuble «Visium»
22, avenue Aristide Briand
94117 Arcueil Cedex (FR)**

(56) Documents cités:
**EP-A1- 0 546 892    WO-A1-2006/050488
WO-A1-2010/025159    US-A1- 2008 252 479**

**Description**

L'invention concerne l'installation de systèmes de mesure constitués d'une chaîne de multiples capteurs, à la périphérie de tubes flexibles, incluant les structures de tubes flexibles dites "ombilicales", qui sont des structures tubulaires de plusieurs composants (câbles électriques, câbles optiques, tubes , etc.) enroulées en hélice ou en s-z, pour assurer une flexibilité d'ensemble, et enveloppées d'une gaine. Les tubes flexibles concernés par la présente invention sont notamment destinés à l'exploitation pétrolière offshore et sont décrits dans les documents normatifs API RP 17B « Recommended Practice for Flexible Pipe » et API RP 17E « Spécification for Subsea Umbilicals » publiés par l'American Petroleum Institute.

Une application envisagée est la production de tubes qui sont destinés à l'exploitation pétrolière et qui sont équipés d'une série de capteurs de contrôle : ces tubes sont immergés et peuvent subir des flexions et des contraintes que le système de mesure est chargé de contrôler. Les capteurs peuvent être des capteurs de contraintes ou des capteurs d'orientation qui permettent de connaître soit les contraintes exercées sur le tube lors de sa déformation soit directement les déformations elles-mêmes. Dans un exemple les capteurs sont des accéléromètres fonctionnant en inclinomètres ; ils donnent une information sur l'orientation locale des parties de tube sur lesquelles ils sont fixés à des positions connues. Cette orientation peut être définie pour chaque capteur sous forme d'une attitude du capteur dans un repère terrestre.

Le document WO2010/025159 décrit un exemple de tube flexible équipé à sa périphérie d'un système de mesure pour le contrôle de puits forés dans des exploitations pétrolières.

Le document EP0546892 décrit une chaîne de capteurs reliés entre eux et portés par un tube de cuvelage ou casing, pour la prospection sismique dans des puits de forage.

Les documents WO2006/050488 et US2008/0252479 décrivent d'autres exemples de chaînes de capteurs utilisés dans le domaine des puits de forage.

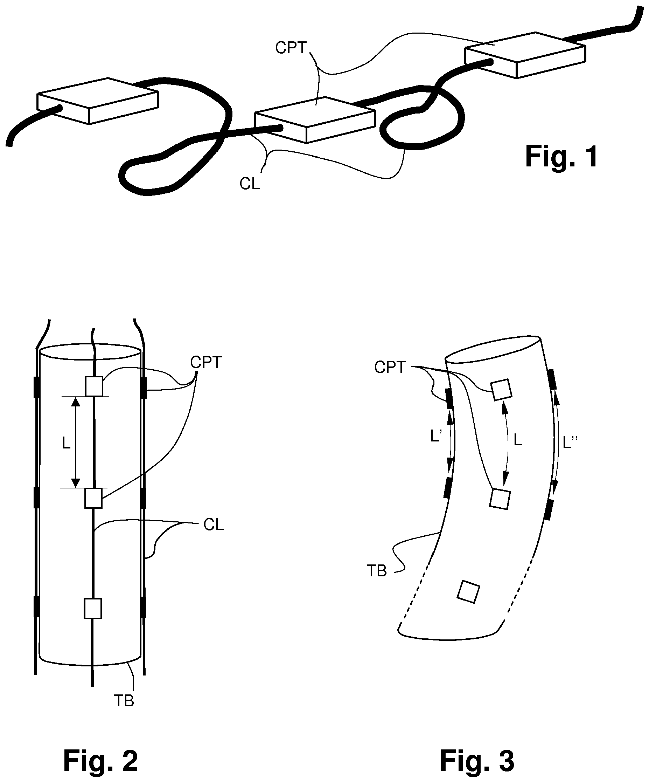

La figure 1 représente une chaîne de capteurs CPT reliés les uns aux autres par des câbles de liaison CL permettant de transmettre vers une extrémité de la chaîne les informations recueillies individuellement par chaque capteur. Les câbles de liaison sont des bus multiconducteurs permettant à la fois l'alimentation électrique des capteurs et la transmission d'informations avec une identification du capteur qui transmet une information. Les capteurs sont des circuits électroniques enfermés dans des boîtiers. Les circuits électroniques peuvent comprendre des éléments électromécaniques, par exemple dans le cas où le capteur comprend un ou plusieurs accéléromètres. Les capteurs sont destinés à être fixés à intervalles réguliers sur la périphérie du tube.

La figure 2 représente un tube flexible cylindrique TB dans une position droite, c'est-à-dire sans courbures, avec plusieurs séries de capteurs reliés les uns aux autres et répartis à intervalles réguliers à la périphérie du tube.

Pour que le tube flexible puisse se déformer sans détériorer la chaîne de capteurs, il faut minimiser les contraintes qui s'exercent sur les câbles, les capteurs, et les attaches des câbles aux capteurs. En particulier, on comprend que si les câbles de liaison sont fixés au tube dans la direction de l'axe du tube et s'ils ont une longueur égale à la distance L entre boîtiers de capteurs, comme représenté sur la figure 2, une courbure du tube flexible (figure 3) va exercer une forte contrainte de traction sur les câbles situés sur la partie convexe de la courbure, avec un risque de rupture du câble ou d'arrachement des soudures du câble au capteur. Les câbles de liaison ne sont pas représentés sur la figure 3, mais on voit que la distance L" entre capteurs à droite (partie convexe - extrados) devient plus grande que les distances L' à gauche (partie concave - intrados) et L correspondant sensiblement à la distance pour le tube droit de la figure 2.

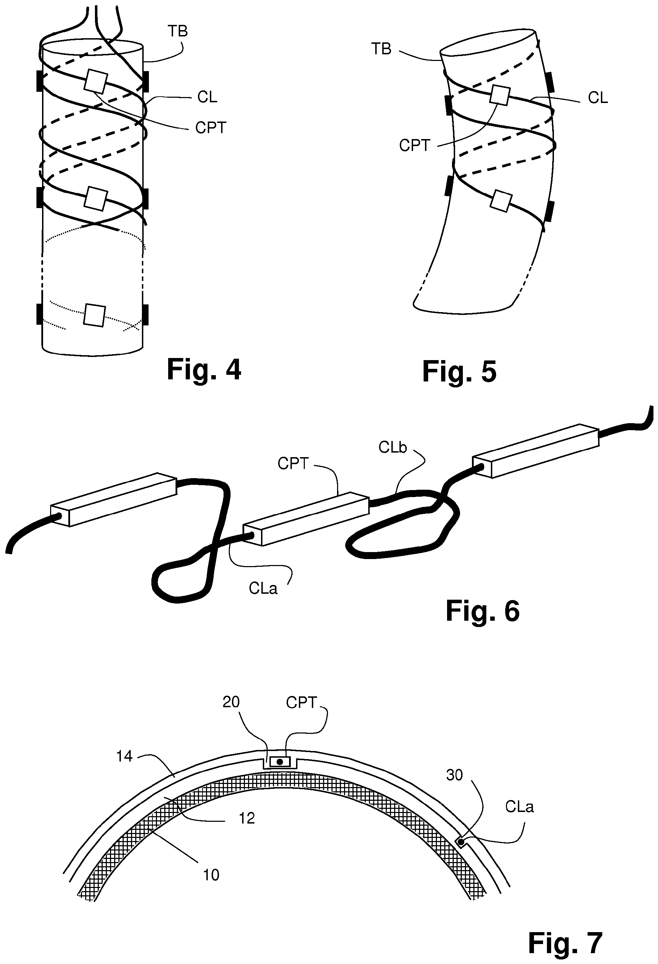

Une manière de limiter ce risque consiste à enrouler les câbles en hélice autour du tube, en effectuant un tour complet du tube (voire plusieurs) entre deux capteurs. Ainsi, l'allongement du câble situé sur la partie convexe de la courbure est compensé par le mou du câble situé sur la partie concave (figures 4 : tube droit ; et figure 5, tube courbé) ; la longueur globale du câble entre deux capteurs n'est donc pas affectée.

Un autre problème se pose lorsque la position du capteur lui-même doit être très bien maîtrisée, non seulement à un endroit bien précis par rapport au tube mais aussi dans son attitude à cet endroit. C'est le cas en particulier d'un capteur à accéléromètres qui comprendrait un circuit imprimé plan portant des composants de mesure dont les informations seraient erronées si le plan du circuit imprimé n'était pas rigoureusement tangent à la périphérie du tube et si les cotés du circuit imprimé n'étaient pas orientés exactement dans les directions souhaitées dans ce plan tangent. De ce point de vue, les dispositions des capteurs des figures 4 et 5 ne sont pas satisfaisantes si les dimensions des capteurs ne sont pas négligeables devant le diamètre du tube.

Pour ces raisons, on propose selon l'invention un tube cylindrique flexible équipé à sa périphérie d'un système de mesure comprenant une chaîne de multiples boîtiers de capteurs reliés électriquement les uns aux autres par des câbles de liaison ; les boîtiers ont une forme allongée avec pour chaque boîtier, dans la direction d'allongement, deux extrémités reliées respectivement à un câble de liaison amont et un câble de liaison aval ; le câble amont et le câble aval suivent principalement deux trajets hélicoïdaux parallèles, séparés à l'endroit de leurs raccordements au boîtier par une distance D non nulle dans la direction de l'axe du tube ; le boîtier de capteur est placé entre les deux câbles et orienté avec sa direction d'allongement parallèle à l'axe des trajets hélicoïdaux qui est confondu avec l'axe du tube ; les capteurs sont situés sur une même génératrice du tube cylindrique ; les boîtiers de capteurs sont placés dans des logements creusés à la périphérie du tube et les câbles sont placés dans des gorges également creusées à la périphérie du tube.

Par l'expression "suivent principalement deux trajets hélicoïdaux", on entend le fait que les câbles suivent un trajet hélicoïdal sur la majeure partie de leur longueur mais ils peuvent s'en écarter à leurs extrémités pour faciliter leur raccordement aux boîtiers des capteurs. La distance D est la distance entre les tracés théoriques hélicoïdaux même si à l'endroit du raccordement au boîtier les câbles de liaison ne suivent plus ces trajets hélicoïdaux.

Par l'expression "trajet hélicoïdal", on entend une courbe en trois dimensions engendrée par un point qui se déplace à la périphérie du tube en tournant autour de celui-ci tout en avançant dans l'axe du tube. Cette courbe est de préférence une hélice circulaire au sens mathématique du terme, à savoir qu'elle est tracée à la surface d'un tube cylindrique circulaire et que la tangente en tout point à la courbe forme un angle constant avec l'axe de l'hélice qui est l'axe du cylindre. On comprendra que si les trajets hélicoïdaux sont exactement des hélices (ce qui est le plus facile à réaliser industriellement), les trajets sont considérés lorsque le tube flexible est dans une position droite et non lorsqu'il subit une flexion qui courbe son axe.

De préférence, chaque câble amont ou aval s'étend sur un tour complet du tube entre deux boîtiers successifs. Mais il est possible de prévoir plusieurs tours complets. Dans tous les cas, les boîtiers restent alignés le long d'une même génératrice du tube (supposé droit).

La distance D séparant deux trajets hélicoïdaux aux extrémités du boîtier sera en général supérieure à la longueur du boîtier du capteur mais ce n'est pas obligatoire. En effet, au voisinage d'une extrémité du boîtier allongé, le câble amont ou aval peut suivre un trajet de raccordement qui l'amène de son trajet hélicoïdal vers une direction parallèle à l'axe du tube, et dans ce cas le trajet de raccordement peut parfois autoriser la présence d'un boîtier de dimension supérieure à D.

De préférence, le tube comprend une âme résistante entourée d'une gaine extérieure et les logements et gorges sont creusés dans cette gaine extérieure (ou rapportés dessus) ; les boîtiers et câbles de liaison peuvent être protégés par une deuxième gaine entourant la première et enfermant les boîtiers et câbles.

De préférence, le tube comporte non pas une seule mais plusieurs chaînes de capteurs, ce qui permet de répartir les boîtiers de capteurs sur plusieurs génératrices du tube cylindrique au lieu d'une seule. Par exemple, trois chaînes de boîtiers permettent de disposer des boîtiers sur des génératrices à 120° les unes des autres. S'il y a N chaînes de rang i = 1 à N, N>1, on peut avantageusement prévoir que le câble aval d'un boîtier de la chaîne de rang i est situé dans le prolongement du même trajet hélicoïdal que le câble amont d'un boîtier de la chaîne de rang i-1. Et on s'arrange de préférence pour que ces deux boîtiers, ainsi qu'un boîtier de chacune des autres chaînes de rang i = 1 à i-1 et de rang i+1 à N, soient tous placés à la même hauteur le long de la génératrice du tube, c'est-à-dire que les boîtiers sont disposés en couronne autour du tube, dans une même tranche cylindrique droite de hauteur égale à la longueur du boîtier ; les autres boîtiers des N chaînes sont placés en couronne dans des tranches cylindriques différentes.

Dans une première série de réalisations, dans lesquelles les trajets hélicoïdaux des différentes chaînes sont tous équidistants les uns des autres, le pas des trajets hélicoïdaux, c'est-à-dire la distance axiale parcourue pour un tour complet de l'hélice, est égal à N fois la distance D, et le pas de répartition des boîtiers d'une chaîne de boîtiers le long d'une génératrice est N+1 fois la distance D. La distance entre trajets hélicoïdaux de chaînes de boîtiers différentes est égale à D.

Dans une deuxième série de réalisations, le pas de l'hélice est égal à la distance D, et le pas de répartition des boîtiers le long d'une génératrice est deux fois la distance D. La distance entre trajets hélicoïdaux est D/N s'il y a N chaînes. Les trajets hélicoïdaux (mais pas les câbles de liaison qui n'occupent qu'une partie de ces trajets) correspondant à la chaîne de rang i croisent alors les boîtiers de toutes les autres chaînes.

L'invention concerne également un procédé de fabrication d'un tube cylindrique flexible équipé à sa périphérie d'un système de mesure comprenant au moins une chaîne de boîtiers de capteurs reliés électriquement les uns aux autres par des câbles de liaison, dans lequel on fabrique d'abord une âme de tube étanche enrobée d'au moins une première gaine cylindrique, caractérisé en ce qu'on effectue les opérations suivantes :

- usinage de la première gaine pour creuser des gorges suivant principalement des portions de tracés hélicoïdaux et, en même temps ou séparément, usinage dans la première gaine de logements allongés dans la direction de l'axe du tube pour recevoir des boîtiers de forme allongée, entre deux portions de tracés hélicoïdaux séparées à l'endroit du logement par une distance non nulle D, et usinage éventuel de gorges de raccordement pour relier une gorge située le long d'un trajet hélicoïdal à un logement, chaque gorge complétée éventuellement par un trajet de raccordement formant un tour complet du tube pour relier deux logements successifs situés sur une même génératrice du tube,

- mise en place de la chaîne de boîtiers, dans laquelle chaque boîtier est relié, par ses extrémités dans sa direction d'allongement respectivement à un câble amont et un câble aval, le boîtier étant placé dans un logement respectif et le câble amont et le câble aval étant placés respectivement chacun dans une gorge reliée à une extrémité respective du logement.

On met en place ensuite de préférence une deuxième gaine cylindrique enfermant les boîtiers et les câbles de liaison dans les logements et les gorges.

D'autres caractéristiques et avantages de l'invention apparaîtront à la lecture de la description détaillée qui suit et qui est faite en référence aux dessins annexés dans lesquels :

- la figure 1 représente une chaîne de boîtiers de capteurs reliés par des câbles ;
- la figure 2 représente un tube flexible cylindrique portant plusieurs systèmes de mesure, en position droite ;
- la figure 3 représente le tube flexible avec ses capteurs, en position courbée ;
- la figure 4 représente un tube cylindrique droit avec plusieurs chaînes de boîtiers reliés par des câbles enroulés hélicoïdalement ;
- la figure 5 représente le tube de la figure 4 en position courbée ;
- la figure 6 représente une chaîne de boîtiers de capteurs à mettre en place à la périphérie d'un tube flexible selon l'invention ;
- la figure 7 représente une coupe du tube flexible montrant un logement de boîtier de capteur et une gorge de câble à la périphérie du tube ;
- la figure 8 représente une vue de la surface du tube flexible avec un logement pour un boîtier et des gorges pour les câbles de liaison, dans la configuration selon l'invention ;
- la figure 9 représente une vue à plus petite échelle de la surface du tube avec un boîtier dans un logement et des câbles dans les gorges ;
- la figure 10 représente le logement et les gorges dans le cas d'un raccordement exigeant des rayons de courbure plus importants ou dans le cas d'un logement de boîtier plus long qu'à la figure 8 ;
- la figure 11 représente une vue des gorges et logements pour plusieurs capteurs ;
- la figure 12 représente une vue développée du tube cylindrique ;
- la figure 13 représente un exemple de configuration des logements et gorges d'un tube équipé de plusieurs chaînes de capteurs ;
- la figure 14 représente une vue d'une configuration particulière dans laquelle une gorge pour un câble amont est dans le prolongement du trajet hélicoïdal d'une gorge pour un câble aval d'un autre capteur situé à la même hauteur le long de l'axe du tube ;
- la figure 15 représente une vue analogue à celle de la figure 14, avec des gorges de raccordement analogues à celles de la figure 10 ;
- la figure 16 représente une configuration différente dans laquelle les capteurs sont plus rapprochés le long de l'axe du tube et dans laquelle trois trajets hélicoïdaux, correspondant à trois chaînes différentes, sont répartis à intervalles égaux au tiers du pas de l'hélice.

Le tube flexible cylindrique selon l'invention est donc équipé d'au moins un système de mesure qui comprend une chaîne de boîtiers de capteurs, dans laquelle les boîtiers ont une forme allongée. Par boîtier de forme allongée, on entend un boîtier dont la plus grande longueur est au moins deux fois plus grande que la plus grande largeur.

A titre d'exemple, pour un tube d'extraction ou de transport de pétrole, le diamètre du tube est d'environ 20 centimètres et la dimension du boîtier est d'environ 100 à 300 millimètres pour une largeur d'environ 15 à 40 millimètres et une épaisseur d'environ 1 à 2 centimètres.

La chaîne est représentée à la figure 6. Les boîtiers sont raccordés les uns aux autres par des câbles de liaison CL qui sont fixés chacun à une extrémité respective située dans la direction d'allongement du boîtier. Chaque boîtier CPT peut être considéré comme étant relié respectivement à un câble amont CLa et un câble aval CLb. La notion d'amont et d'aval est ici choisie arbitrairement ; elle correspond par exemple à l'ordre de mise en place de la chaîne à la périphérie du tube flexible : d'abord le câble aval, puis le boîtier, puis le câble amont. On comprendra que le câble aval d'un boîtier est en même temps le câble amont du boîtier suivant.

Les boîtiers peuvent contenir des circuits électroniques quelconques, et plus particulièrement des circuits de détection de paramètres liés au tube ou à son contenu. On considérera ci-après que les capteurs sont des capteurs qui permettent de déterminer la géométrie réelle du tube flexible. Les capteurs peuvent être des accéléromètres fonctionnant en inclinomètres, c'est-à-dire que chaque boîtier contient un circuit de mesure de l'attitude du boîtier fixé de manière rigide à une position connue du tube et dans une relation connue par rapport à la périphérie du tube. L'ensemble des données fournies par la chaîne de capteurs permet de connaître les déformations du tube lorsque celui subit des flexions. Cette transmission de données est utile notamment pour les tubes immergés ou semi-immergés, par exemple les tubes de raccordement ou d'extraction sur les navires offshore d'exploitation pétrolière en mer.

La figure 7 représente une section transversale du tube flexible cylindrique, montrant que celui-ci possède par exemple une âme cylindrique étanche et résistante 10, par exemple une armature métallique enrobée de matière étanche, entourée par une première gaine périphérique 12 dans laquelle seront installés les boîtiers et les câbles, la première gaine 12 étant elle-même entourée par une deuxième gaine 14 protégeant les boîtiers et les câbles. On a représenté sur cette figure un logement 20 creusé dans la gaine 12 et une gorge 30 creusée également dans la gaine. Le logement contient un boîtier de capteur CPT et la gorge contient un câble de liaison CLa.

Les logements et les gorges sont répartis à la périphérie du tube flexible comme on va l'expliquer. Lorsqu'on mentionne dans la présente demande de brevet que le système de mesure est installé "à la périphérie" du tube flexible, cela signifie qu'il est situé du côté de l'extérieur de l'âme du tube, même s'il est enfermé à l'intérieur des gaines 12 et 14.

Pour fabriquer le tube selon l'invention, on fabrique d'abord l'âme 10 (armature métallique et gainage à chaud pour l'étanchéité) ; on enrobe l'âme d'une première gaine cylindrique 12 posée à froid ; puis on usine à l'aide d'une machine automatique programmée les logements pour les boîtiers et les gorges pour les câbles, soit séparément soit en même temps ; puis on met en place la chaîne de boîtiers ; enfin, on recouvre le tube d'une deuxième gaine 14 posée à froid, qui enferme les boîtiers et les câbles pour les protéger.

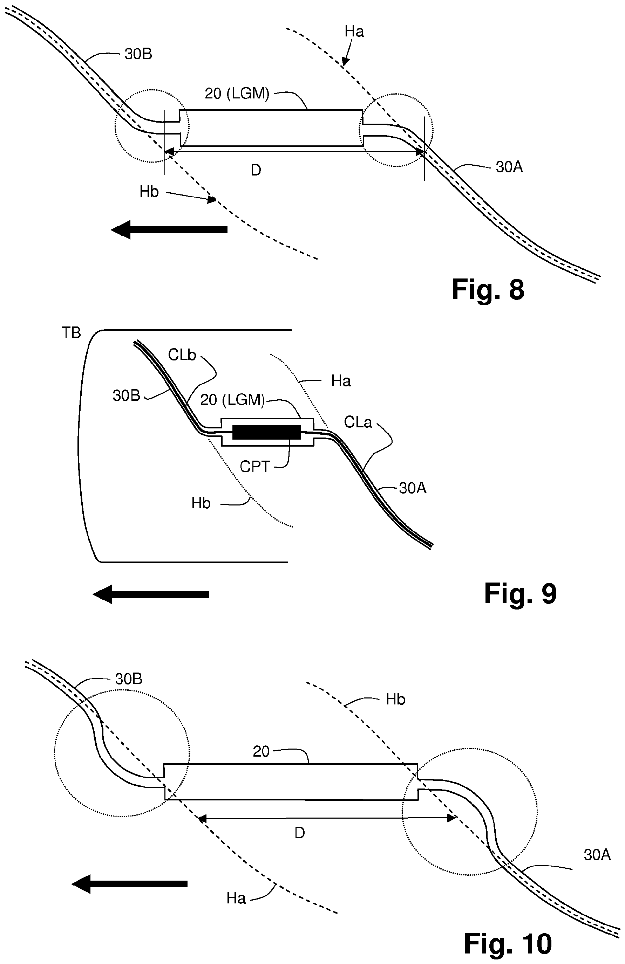

La figure 8 représente la configuration de principe de l'invention, à l'endroit du logement d'un boîtier de capteur. Une vue de la surface de la première gaine extérieure 12 est représentée. Dans cette gaine sont gravés :

-   un logement allongé 20 destiné à recevoir un boîtier de capteur ; la direction d'allongement est la direction de l'axe du tube représenté par une flèche épaisse ;
-   et deux gorges 30A et 30B qui rejoignent chacune une extrémité respective du logement (extrémités prises dans la direction d'allongement).

Les gorges suivent principalement chacune une portion d'un trajet hélicoïdal respectif désigné par une ligne pointillée Ha pour le trajet hélicoïdal correspondant à la gorge 30A (qu'on appellera gorge amont) et par une ligne pointillée Hb pour le trajet hélicoïdal correspondant à la gorge 30B (qu'on appellera gorge aval). Ces trajets hélicoïdaux sont séparés à l'endroit du capteur par une distance D non nulle, mesurée selon l'axe du trajet hélicoïdal, c'est-à-dire selon l'axe du tube ; dans cet exemple, la distance D est supérieure à la longueur du logement, mais on verra que le logement peut dans certains cas déborder de part et d'autre de la distance D.

La gorge aval 30B se poursuit sur un trajet hélicoïdal qui fait tout un tour du tube et qui rejoint alors un autre logement (non représenté sur la figure 8) situé en aval le long de la même génératrice du tube cylindrique que le logement 20 visible sur la figure 8. De même, la gorge amont 30A peut faire tout un tour du tube le long d'un trajet hélicoïdal et être reliée à un logement non représenté situé en amont le long de la même génératrice.

Les deux gorges s'étendent donc principalement sur deux trajets hélicoïdaux séparés. Le mot "principalement" se réfère au fait que la gorge peut éventuellement, mais pas obligatoirement, s'écarter localement du trajet hélicoïdal représenté par la ligne pointillée Ha ou Hb et suivre une portion de trajet dite "trajet de raccordement" qui rejoint le logement dans la direction de l'axe du tube. Dans l'exemple représenté, les trajets de raccordement (entourés chacun par un cercle pointillé) sont de simples arcs de cercle dont le rayon de courbure est un rayon de courbure acceptable pour le câble de liaison et dont la valeur angulaire est l'écart entre la direction du trajet de l'hélice (constante pour une hélice mathématiquement rigoureuse) et l'axe du tube. Une autre configuration de gorge de raccordement sera expliquée en référence à la figure 10 pour permettre des raccordements avec des rayons de courbure plus grands.

La figure 9 représente, à plus petite échelle, le logement 20 équipé d'un boîtier CPT et les gorges 30A et 30B équipées respectivement d'un câble de liaison amont CLA et d'un câble de liaison aval CLb.

On notera que les gorges ne sont creusées que sur une partie du trajet hélicoïdal, c'est-à-dire qu'elles ne se poursuivent pas au-delà d'un tour après que la gorge est parvenue jusqu'à une extrémité de boîtier puisque le câble ne se prolonge pas au-delà du logement. Alternativement, on pourrait aussi prévoir, par exemple si cela simplifie le processus de gravure des gorges, que les gorges se poursuivent en suivant le trajet de la ligne pointillée Ha ou Hb ; cependant, la mise en place des boîtiers et des câbles est plus simple lorsque les gorges ne sont creusées que là où elles sont nécessaires pour recevoir un câble.

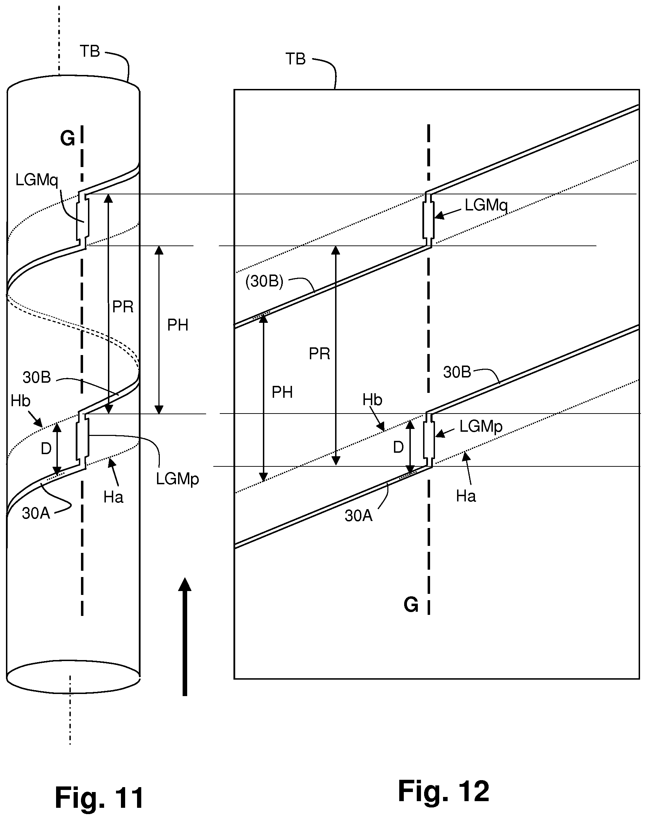

La figure 10 représente un exemple de trajet de raccordement plus long que celui de la figure 12, comportant deux arcs de cercle et un point d'inflexion, permettant à la gorge de rejoindre le logement avec des rayons de courbure plus grands lorsque le câble ne supporte pas d'être trop courbé, ou permettant alternativement de prévoir un logement de boîtier (et donc un boîtier) de longueur plus importante par rapport à la distance D entre le trajet hélicoïdal aval et le trajet hélicoïdal amont. La longueur du logement peut atteindre ou même dépasser la distance D comme le montre la figure 10. Une limite de longueur existe cependant lorsqu'il y a plusieurs chaînes de capteurs car le pas de répartition des trajets hélicoïdaux peut devenir, comme on le verra, égal à D/N si N est le nombre de chaînes ; dans ce cas, il ne faut pas que le trajet de raccordement qui s'écarte du trajet hélicoïdal et qui augmente latéralement l'encombrement de celui-ci vienne rencontrer un trajet hélicoïdal voisin. On reviendra plus loin sur le cas de plusieurs chaînes de capteurs.

La figure 11 représente sous forme simplifiée une vue d'un tube comportant une seule chaîne de capteurs situés sur une même génératrice G du tube. Seuls les logements des boîtiers et les gorges pour les câbles sont représentés, les boîtiers et les câbles ne sont pas représentés. Les trajets de raccordement évitant les coudes des câbles ne sont pas représentés. La gorge aval 30B partant du logement LGMp pour un premier boîtier fait un tour complet du tube et atteint le logement LGMq d'un deuxième boîtier situé sur la même génératrice G que le premier.

Le pas PH du trajet hélicoïdal, c'est-à-dire la distance parcourue selon l'axe du tube par la gorge pendant ce tour complet peut être quelconque, dépendant de l'espacement souhaité entre les boîtiers dans la chaîne. La limite inférieure pour le pas de l'hélice est la distance minimale qu'il faut garder entre deux logements pour loger au moins une largeur de gorge et un intervalle minimum entre gorges. Cette limite inférieure du pas de l'hélice est bien sûr augmentée lorsqu'il y a des trajets de raccordement de gorges tels que ceux de la figure 10.

Le pas de répartition des capteurs le long de la génératrice du tube est PR égal à la somme du pas de l'hélice et de la distance entre hélices Ha et Hb.

$$PR = PH + D.$$

La figure 12 est une vue développée sur un plan de la surface du tube de la figure 11. La vue développée plane d'une hélice est simplement une droite faisant un angle constant avec la génératrice G donc avec la direction de l'axe du tube, cette direction étant désignée par une flèche verticale. On voit donc sur la figure 12 une droite représentant la gorge 30A sur une portion d'un trajet hélicoïdal qui est une droite Ha. Cette droite rejoint le logement LGMp par l'extrémité basse de ce dernier. Une autre droite représente la gorge 30B partant de l'autre extrémité du logement LGMq, sur un trajet hélicoïdal Hb séparé du trajet Ha dans le sens de l'axe du tube par une distance D. Le trajet 30B se prolonge jusqu'à rejoindre l'extrémité inférieure du logement LGMq.

Le tube selon l'invention peut être équipé de plusieurs chaînes de capteurs dans le cas où on veut répartir des capteurs tout autour du tube et pas seulement le long d'une seule génératrice. On prévoit alors N chaînes de capteurs. Les capteurs d'une chaîne de rang i parmi N sont sur une génératrice et les capteurs d'une chaîne de rang i+1 sont sur une autre génératrice située à une distance angulaire de 360°/N de la première. N boîtiers sont alors situés tous à la même hauteur le long du tube et forment une couronne cylindrique autour du tube. Par exemple, trois chaînes de boîtiers permettent de disposer des boîtiers sur des génératrices à 120° les unes des autres.

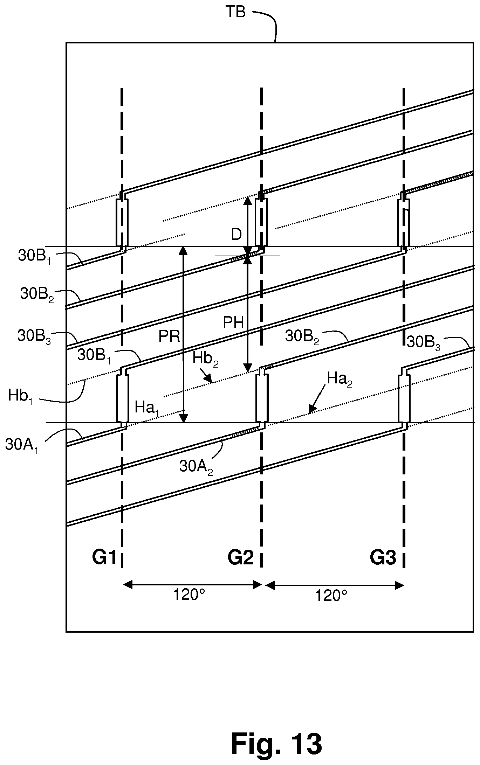

La figure 13 représente une première disposition des logements et gorges qui permet cette répartition régulière axiale et radiale avec trois chaînes de boîtiers dans le système de mesure. Pour simplifier la représentation, la figure 13 est une vue développée comme la figure 12. On y voit trois des logements situés respectivement sur trois génératrices G1, G2, G3 du tube. Le logement du bas de la figure pour la première chaîne est situé sur la génératrice G1 ; il est relié à une gorge amont $30A_1$ destinée à un câble amont du boîtier qui viendra dans ce logement. Cette gorge est située sur une hélice $Ha_1$. Ce même logement est relié de l'autre côté à une gorge aval $30B_1$ qui fait un tour complet du tube avant de rejoindre un autre logement sur la même génératrice G1 ; la gorge aval est située sur une hélice $Hb_1$. La configuration est la même pour les autres chaînes, correspondant aux autres génératrices G2 (hélices $Ha_2$ et $Hb_2$) et G3.

Dans la configuration de la figure 13, le pas PH de l'hélice peut être quelconque mais il doit correspondre au minimum à une distance permettant de loger entre deux capteurs d'une même génératrice à la fois N gorges, les espaces nécessaires entre gorges voisines, et éventuellement l'encombrement dû aux trajets de raccordement lorsqu'il y a des trajets de raccordement tels que ceux de la figure 10.

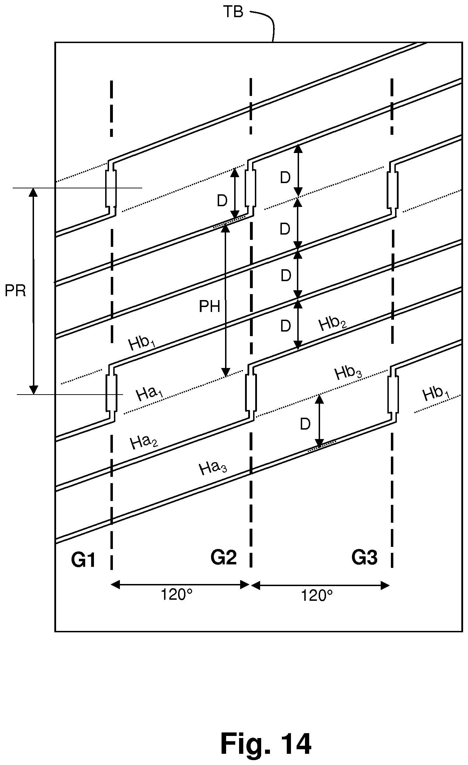

Dans l'exemple de la figure 13, les trajets hélicoïdaux correspondant aux différentes chaînes de mesure sont tous différents les uns des autres. On verra en référence à la figure 14 que des trajets hélicoïdaux peuvent être communs à deux chaînes de capteurs. Ainsi, sur la figure 13, le trajet hélicoïdal $Ha_1$ sur lequel se trouve la gorge $30A_1$ n'est pas dans le prolongement du trajet hélicoïdal $Hb_2$ ni d'un autre trajet.

Dans l'exemple représenté à la figure 14 au contraire, on a choisi une configuration particulière dans laquelle des trajets hélicoïdaux peuvent être confondus. Cela permet de répartir les trajets hélicoïdaux des gorges régulièrement le long de l'axe du tube. Le pas de l'hélice est alors N fois (s'il y a N chaînes) la distance D, et le pas de répartition des boîtiers le long de l'axe est N+1 fois la distance D.

$$PH = NxD$$

$$PR = (N+1)xD$$

Dans cette configuration particulière, le trajet hélicoïdal $Hb_i$ du câble de liaison aval, donc d'une gorge aval $30B_i$, d'un capteur $CPT_i$ appartenant à une chaîne de capteurs de rang i, se situe exactement dans le prolongement du trajet hélicoïdal du câble de liaison amont, donc d'une gorge amont $30A_{i-1}$, d'un capteur adjacent $CPT_{i-1}$, appartenant à la chaîne de mesure de rang i-1. Ainsi, sur la figure 14, avec trois chaînes de mesure, la gorge aval d'un capteur de la deuxième chaîne (sur la génératrice G2) est située sur une hélice $Hb_2$ qui est exactement dans le prolongement de l'hélice $Ha_1$ correspondant à la gorge amont du capteur situé au même niveau sur la génératrice G1. Il en est de même pour les hélices $Hb_3$ et $Ha_2$, et, par permutation circulaire, pour les hélices $Hb_1$ et $Ha_3$

Sur les figures 13 et 14, les trajets de raccordement entre les portions de trajets hélicoïdaux et les logements de boîtiers ne sont pas représentés et on considère que les câbles peuvent être coudés ou recourbés avec un rayon de courbure faible comme représenté à la figure 8.

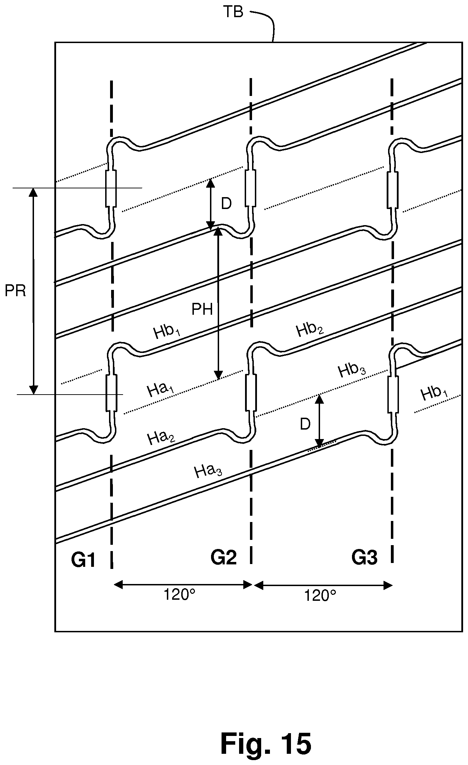

Sur la figure 15, on a représenté la même configuration générale qu'à la figure 14 avec trois chaînes de capteurs et une répartition équidistante de toutes les hélices, mais les trajets de raccordement sont semblables à ceux de la figure 10.

On a représenté sur la figure 15 des logements de capteurs de même longueur que ceux de la figure 14, mais on voit qu'on pourrait avoir des logements plus grands dans le sens de l'axe du tube, et même des logements plus longs que la distance D entre hélices.

Dans une autre série de réalisations, on peut raccourcir significativement le pas de répartition des capteurs le long des génératrices, et cela même si des trajets de raccordement du type de la figure 10 sont nécessaires.

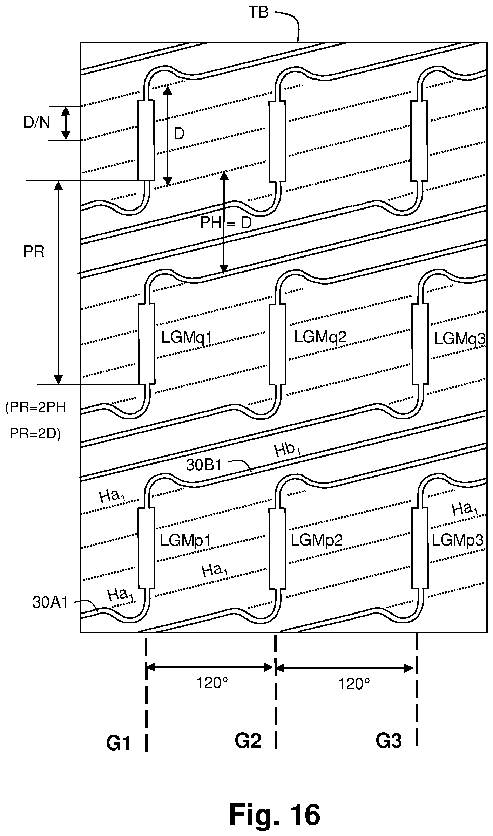

La figure 16 représente la configuration qui le permet. Alors que dans les figures 14 et 15 les trajets hélicoïdaux ne passent jamais sur l'emplacement d'un capteur, sur la figure 16, les trajets hélicoïdaux théoriques correspondant aux chaînes autres qu'une chaîne de rang i passent à l'endroit des capteurs de la chaîne de rang i. Cela ne veut pas dire pour autant que les gorges correspondantes croisent les logements des boîtiers : seuls les trajets théoriques les croisent mais les gorges sont creusées dans des portions de trajets qui ne se trouvent pas à l'emplacement des logements. La figure 16 représente une configuration avec des trajets de raccordement identiques à ceux de la figure 15, mais bien entendu une configuration avec des trajets de raccordement en simple arc de cercle peut être prévue.

Trois chaînes de mesure sont installées, avec des logements LGMp1, LGMq1, etc. pour la première chaîne le long de la génératrice G1, des logements LGMp2, LGMq2, etc. pour la deuxième chaîne, le long de la génératrice G2 à 120° de la génératrice G1, et des logements LGMp3, LGMq3, etc. pour la troisième chaîne le long de la génératrice G3 à 120° des génératrices G1 et G2.

Un boîtier installé dans le logement LGMp1 est relié à un câble amont situé dans une gorge 30A1 située sur une portion d'un trajet hélicoïdal Ha1 représenté par une droite en pointillés ; il est relié par ailleurs à un câble aval situé dans une gorge 30B1 située sur une portion d'un trajet hélicoïdal Hb1. Mais la particularité de cette configuration est le fait que le trajet hélicoïdal aval Hb1 est dans le prolongement exact du trajet hélicoïdal Ha1. A l'endroit du logement LGMp1, la distance entre les trajets hélicoïdaux Ha1 et Hb1 est égale exactement au pas de l'hélice Ha1.

Par conséquent, on a un pas d'hélice PH = D. Le pas de répartition des logements de boîtiers est PR = 2 fois le pas de l'hélice.

$$PR = 2 \times PH = 2 \times D$$

Le trajet hélicoïdal Ha1 prolonge la gorge 30A1 en croisant l'emplacement du logement LGMp2 puis l'emplacement du logement LGMp3, mais il n'est pas nécessaire qu'une gorge soit creusée le long de l'hélice entre les logements puisqu'il n'y a pas de câble à faire passer à ces endroits.

Cette configuration de la figure 16 est celle qui permet de loger le plus grand nombre de boîtiers de capteurs le long de l'axe du tube puisque c'est la configuration qui donne le plus petit pas de répartition des logements pour une dimension donnée de logement.

Le pas de répartition des hélices est maintenant égal à D/N pour N chaînes de mesure, alors que sur les figures 14 et 15 il était égal à la distance D. Il faut donc prendre garde tout particulièrement aux trajets de raccordement du type de la figure 10, qui rapprochent les gorges les unes des autres.

Pour la fabrication industrielle du tube selon l'invention, on utilise des machines de gravure automatisées qui creusent les gorges hélicoïdales sur un tube en exerçant simultanément des déplacements relatifs en rotation et en translation de l'outillage de gravure par rapport au tube. L'outil de gravure peut être relevé, sans arrêter le mouvement relatif du tube et de la machine, au-dessus des portions de trajet hélicoïdal qui n'ont pas besoin d'être creusées. Les logements sont gravés en arrêtant le mouvement de rotation général de l'outillage mais en maintenant une liberté de déplacement locale de l'outil et en maintenant un mouvement de translation selon l'axe du tube. Les tranchées de raccordement doivent être programmées spécifiquement. Les diverses gravures peuvent être faites en une passe (avec des mouvements d'outil ou de tube plus complexes) ou en plusieurs passes (tranchées, logements) avec des mouvements plus simples de translation et/ou de rotation de l'outil. Les chaînes de capteurs sont fabriquées séparément. Elles sont mises en place manuellement ou par une machine automatique. Le tube est ensuite enrobé d'une gaine de protection et de maintien (gaine 14 sur la figure 7).

**Revendications**

1. Tube cylindrique flexible (TB) équipé à sa périphérie d'un système de mesure comprenant une chaîne de multiples boîtiers de capteurs reliés électriquement les uns aux autres par des câbles de liaison, **caractérisé en ce que** les boîtiers (CPT) ont une forme allongée avec pour chaque boîtier, dans la direction d'allongement, deux extrémités reliées respectivement à un câble de liaison amont (CLa) et un câble de liaison aval (CLb), le câble amont et le câble aval suivant principalement deux trajets hélicoïdaux parallèles, séparés à l'endroit de leurs raccordements au boîtier par une distance D non nulle dans la direction de l'axe du tube, le boîtier étant placé entre les deux câbles et orienté avec sa direction d'allongement parallèle à l'axe des trajets hélicoïdaux, confondu avec l'axe du tube, et les capteurs étant situés sur une même génératrice (G) du tube cylindrique, les boîtiers de capteurs étant placés dans des logements (LGM) creusés à la périphérie du tube et les câbles étant placés dans des gorges (30A, 30B) également creusées à la périphérie du tube.

2. Tube selon la revendication 1, **caractérisé en ce que** les gorges sont formées sur des portions de trajet hélicoïdal s'étendant essentiellement sur un tour complet du tube entre deux boîtiers successifs.

3. Tube selon l'une des revendications 1 et 2, **caractérisé en ce que** le trajet des gorges est complété par des trajets de raccordement rejoignant les logements dans la direction de l'axe du tube.

4. Tube selon l'une des revendications 1 à 3, **caractérisé en ce qu'**il est équipé de N chaînes de capteurs, N>1, les capteurs des différentes chaînes étant placés le long de différentes génératrices (G1, G2, G3) du tube cylindrique.

5. Tube selon la revendication 4, **caractérisé en ce qu'**un boîtier d'une chaîne de rang quelconque i = 1 à N est placé à la même hauteur le long de la génératrice du tube qu'un boîtier respectif de chacune des autres chaînes.

6. Tube selon l'une des revendications 4 et 5, **caractérisé en ce que** le câble de liaison aval d'un boîtier de la chaîne de rang i est situé dans le prolongement du même trajet hélicoïdal que le câble amont d'un boîtier de la chaîne de rang i-1.

7. Tube selon la revendication 6, **caractérisé en ce que** les trajets hélicoïdaux des différentes chaînes sont tous équidistants les uns des autres, le pas des trajets hélicoïdaux étant égal à N fois la distance D, et le pas de répartition des boîtiers d'une chaîne de boîtiers le long d'une génératrice étant égal à N+1 fois la distance D.

8. Tube selon l'une des revendications 4 et 5, **caractérisé en ce que** le pas de l'hélice est égal à la distance D, le pas de répartition des boîtiers le long d'une génératrice est deux fois la distance D, et la distance entre trajets hélicoïdaux est D/N.

9. Procédé de fabrication d'un tube cylindrique flexible équipé à sa périphérie d'un système de mesure comprenant au moins une chaîne de boîtiers de capteurs (CPT) reliés électriquement les uns aux autres par des câbles de liaison (CLa, CLb), dans lequel on fabrique d'abord une âme (10) de tube étanche enrobée d'au moins une première gaine cylindrique (12), **caractérisé en ce qu'**on effectue les opérations suivantes :

- usinage de la première gaine pour creuser des gorges (30A, 30B) suivant principalement des portions de tracés hélicoïdaux (Ha, Hb) et, en même temps ou séparément, usinage dans la première gaine de logements (LGM) allongés dans la direction de l'axe du tube pour recevoir des boîtiers de forme allongée, entre deux portions de tracés hélicoïdaux (Ha, Hb) séparées à l'endroit du logement par une distance non nulle D, et usinage éventuel de gorges de raccordement pour relier une gorge située le long d'un trajet hélicoïdal à un logement, chaque gorge formant essentiellement un tour complet du tube pour relier deux logements successifs (LGMp, LGMq) situés sur une même génératrice du tube,
- mise en place de la chaîne de boîtiers, dans laquelle chaque boîtier est relié, par ses extrémités dans sa direction d'allongement respectivement à un câble amont et un câble aval, le boîtier étant placé dans un logement respectif et le câble amont et le câble aval étant placés respectivement chacun dans une gorge reliée à une extrémité respective du logement.

10. Procédé selon la revendication 9, **caractérisé en ce que** l'on met ensuite en place une deuxième gaine cylindrique (14) enfermant les boîtiers et les câbles de liaison dans les logements et les gorges.

## Patentansprüche

1. Flexible zylindrische Röhre (TB), die an ihrer Peripherie mit einem Messsystem ausgestattet ist, das eine Kette von mehreren Sensorgehäusen umfasst, die durch Verbindungskabel elektrisch miteinander verbunden sind, **dadurch gekennzeichnet, dass** die Gehäuse (CPT) eine längliche Form haben, wobei jedes Gehäuse in der Längsrichtung zwei Enden aufweist, die jeweils mit einem stromaufwärtigen Verbindungskabel (CLa) und einem stromabwärtigen Verbindungskabel (CLb) verbunden sind, wobei das stromaufwärtige Kabel und das stromabwärtige Kabel im Prinzip zwei parallelen spiralförmigen Bahnen folgen, die am Ort ihres Anschlusses am Gehäuse durch einen Abstand D von ungleich null in der Richtung der Achse der Röhre getrennt sind, wobei das Gehäuse zwischen den beiden Kabeln platziert und mit seiner Längsrichtung parallel zur Achse der spiralförmigen Bahnen orientiert ist, zusammenfallend mit der Achse der Röhre, und wobei sich die Sensoren auf einer selben Mantellinie (G) der zylindrischen Röhre befinden, wobei die Sensorgehäuse in hohlen Aufnahmen (LGM) an der Peripherie der Röhre platziert sind und die Kabel in ebenfalls hohlen Kehlen (30A, 30B) an der Peripherie der Röhre platziert sind.

2. Röhre nach Anspruch 1, **dadurch gekennzeichnet,**

**dass** die Kehlen auf zwei spiralförmigen Bahnabschnitten ausgebildet sind, die im Wesentlichen auf einer kompletten Umdrehung der Röhre zwischen zwei aufeinander folgenden Gehäusen verlaufen.

3.  Röhre nach einem der Ansprüche 1 und 2, **dadurch gekennzeichnet, dass** die Bahn der Kehlen durch Anschlussbahnen vervollständigt wird, die sich an die Aufnahmen in Richtung der Achse der Röhre fügen.

4.  Röhre nach einem der Ansprüche 1 bis 3, **dadurch gekennzeichnet, dass** sie mit N Sensorketten ausgestattet ist, N>1, wobei die Sensoren der unterschiedlichen Ketten entlang unterschiedlichen Mantellinien (G1, G2, G3) der zylindrischen Röhre platziert sind.

5.  Röhre nach Anspruch 4, **dadurch gekennzeichnet, dass** ein Gehäuse einer Kette eines beliebigen Rangs i = 1 bis N in derselben Höhe entlang der Mantellinie der Röhre platziert ist wie ein jeweiliges Gehäuse von jeder der anderen Ketten.

6.  Röhre nach einem der Ansprüche 4 und 5, **dadurch gekennzeichnet, dass** sich das stromabwärtige Verbindungskabel eines Gehäuses der Kette von Rang i in der Verlängerung derselben spiralförmigen Bahn befindet wie das stromaufwärtige Kabel von einem Gehäuse der Kette von Rang i-1.

7.  Röhre nach Anspruch 6, **dadurch gekennzeichnet, dass** die spiralförmigen Bahnen von unterschiedlichen Ketten alle in einem gleichen Abstand voneinander sind, wobei die Steigung der spiralförmigen Bahnen gleich N mal Distanz D ist und die Abstände der Gehäuse einer Gehäusekette entlang einer Mantellinie gleich N+1 mal Distanz D sind.

8.  Röhre nach einem der Ansprüche 4 und 5, **dadurch gekennzeichnet, dass** die Steigung des Spirale gleich der Distanz D ist, die Abstände der Gehäuse entlang einer Mantellinie das Zweifache der Distanz D sind und die Distanz zwischen spiralförmigen Bahnen D/N ist.

9.  Verfahren zur Herstellung einer flexiblen zylindrischen Röhre, die an ihrer Peripherie ausgestattet ist mit einem Messsystem, das wenigstens eine Kette von Sensorgehäusen (CPT) umfasst, die durch Verbindungskabel (CLa, CLb) elektrisch miteinander verbunden sind, wobei zunächst ein dichter Röhrenkem (10) hergestellt wird, der von wenigstens einem ersten zylindrischen Mantel (12) umhüllt wird, **dadurch gekennzeichnet, dass** die folgenden Vorgänge durchgeführt werden:

    - Bearbeiten des ersten Mantels zum Aushöhlen von Kehlen (30A, 30B), die prinzipiell Abschnitten von spiralförmigen Verlaufsabschnitten (Ha, Hb) folgen und, gleichzeitig oder getrennt, Bearbeiten in dem ersten Mantel von länglichen Aufnahmen (LGM) in der Richtung der Achse der Röhre zum Aufnehmen von Gehäusen mit länglicher Form zwischen zwei spiralförmigen Verlaufsabschnitten (Ha, Hb), die an der Stelle der Aufnahme durch eine Distanz D von ungleich null getrennt sind, und eventuelles Bearbeiten von Anschlusskehlen zum Verbinden einer entlang einer spiralförmigen Bahn befindlichen Kehle mit einer Aufnahme, wobei jede Kehle im Wesentlichen eine vollständige Umdrehung der Röhre bildet, um zwei aufeinander folgende Aufnahmen (LGMp, LGMq) zu bilden, die sich auf einer selben Mantellinie der Röhre befinden,

    - Platzieren der Gehäusekette, in der jedes Gehäuse an seinen Enden in seiner Längsrichtung jeweils mit einem stromaufwärtigen Kabel und einem stromabwärtigen Kabel verbunden ist, wobei das Gehäuse in einer jeweiligen Aufnahme platziert ist und das stromaufwärtige Kabel und das stromabwärtige Kabel jeweils in einer Kehle platziert sind, die mit einem jeweiligen Ende der Aufnahme verbunden ist.

10. Verfahren nach Anspruch 9, **dadurch gekennzeichnet, dass** dann ein zweiter zylindrischer Mantel (14) platziert wird, der die Gehäuse und die Verbindungskabel in den Aufnahmen und den Kehlen umschließt.

## Claims

1.  A flexible cylindrical pipe (TB) equipped at its periphery with a measurement system comprising a string of multiple sensor housings linked electrically to one another by link cables, **characterized in that** the housings (CPT) have an elongate form with, for each housing, in the direction of elongation, two ends linked respectively to an upstream link cable (CLa) and a downstream link cable (CLb), the upstream cable and the downstream cable following primarily two parallel helical paths, separated at the point of their connections to the housing by a non-zero distance D in the direction of the axis of the pipe, the housing being placed between the two cables and oriented with its direction of elongation parallel to the axis of the helical paths, merged with the axis of the pipe, and the sensors being situated on a same generatrix (G) of the cylindrical pipe, the sensor housings being placed in recesses (LGM) hollowed out at the periphery of the pipe and the cables being placed in grooves (30A, 30B) also hollowed out at the periphery of the pipe.

**2.** The pipe of claim 1, **characterized in that** the grooves are formed on helical path portions extending essentially over a complete turn of the pipe between two successive housings.

**3.** The pipe of claims 1 and 2, **characterized in that** the path of the grooves is completed by connecting paths joining recesses in the direction of the axis of the pipe.

**4.** The pipe of claims 1 to 3, **characterized in that** it is equipped with N strings of sensors, N>1, the sensors of the different strings being placed along different generatrices (G1, G2, G3) of the cylindrical pipe.

**5.** The pipe of claim 4, **characterized in that** a housing of a string of any rank i=1 to N is placed at the same height along the generatrix of the pipe as a respective housing of each of the other strings.

**6.** The pipe of claims 4 and 5, **characterized in that** the downstream link cable of a housing of the string of rank i is situated in the extension of the same helical path as the upstream cable of a housing of the string of rank i-1.

**7.** The pipe of claim 6, **characterized in that** the helical paths of the different strings are all equidistant to one another, the pitch of the helical paths being equal to N times the distance D, and the pitch of distribution of the housings of a string of housings along a generatrix being equal to N+1 times the distance D.

**8.** The pipe of claims 4 and 5, **characterized in that** the pitch of the helix is equal to the distance D, the pitch of distribution of the housings along a generatrix is two times the distance D, and the distance between helical paths is D/N.

**9.** A method for manufacturing a flexible cylindrical pipe equipped at its periphery with a measurement system comprising at least one string of sensor housings (CPT) linked electrically to one another by link cables (CLa, CLb), in which a tight pipe core (10) coated with at least one first cylindrical sheath (12) is first of all manufactured, **characterized in that** the following operations are performed:

- machining of the first sheath to hollow out grooves (30A, 30B) primarily following portions of helical plots (Ha, Hb) and, at the same time or separately, machining in the first sheath of elongate recesses (LGM) in the direction of the axis of the pipe to receive housings of elongate form, between two portions of helical plots (Ha, Hb) separated at the point of the recess by a non-zero distance D, and possible machining of connecting grooves to link a groove situated along a helical path to a recess, each groove essentially forming a complete turn of the pipe to link two successive recesses (LGMp, LGMq) situated on a same generatrix of the pipe,
- fitting of the string of housings, in which each housing is linked, by its ends in its direction of elongation, respectively to an upstream cable and a downstream cable, the housing being placed in a respective recess and the upstream cable and the downstream cable being each placed respectively in a groove linked to a respective end of the recess.

**10.** The method of claim 9, **characterized in that** a second cylindrical sheath (14) is then put in place, enclosing the housings and the link cables in the recesses and the grooves.

CPT

**Fig. 1**

CL

CPT

L

CL

TB

CPT

L'  L  L''

TB

**Fig. 2**  **Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

TB

PR

D

PH

Hb$_1$

Hb$_2$

Ha$_1$

Hb$_3$

Ha$_2$

Hb$_1$

D

Ha$_3$

G1

G2

G3

120°    120°

# Fig. 15

**Fig. 16**

**EP 3 123 119 B1**

## RÉFÉRENCES CITÉES DANS LA DESCRIPTION

**Documents brevets cités dans la description**

- WO 2010025159 A
- EP 0546892 A
- WO 2006050488 A
- US 20080252479 A

**Littérature non-brevet citée dans la description**

- Recommended Practice for Flexible Pipe » et API RP 17E. Spécification for Subsea Umbilicals. American Petroleum Institute